# EUROPÄISCHE PATENTSCHRIFT

(11) **EP 2 090 946 B1**
(45) Veröffentlichungstag und Bekanntmachung des Hinweises auf die Patenterteilung: **06.04.2011**
(21) Anmeldenummer: 08002772.5
(22) Anmeldetag: 14.02.2008
(51) Int. Cl.: G05B 19/042, G08C 19/02

(54) **Verfahren und Vorrichtung zum Erfassen und Aussenden von Signalen bei fehlersicheren Automatisierungskomponenten**
Method and device for receiving and transmitting signals for safety-oriented automation components
Procédé et dispositif d'enregistrement et d'émission de signaux dans des composants d'automatisation sécurisés

(43) Veröffentlichungstag der Anmeldung: 19.08.2009
(73) Patentinhaber: SIEMENS AKTIENGESELLSCHAFT, 80333 München (DE)
(72) Erfinder: Gramolla, Tobias, 92245 Kümmersbruck (DE); König, Mathias, 91284 Neuhaus an der Pegnitz (DE); Maier, Mario, 92266 Ensdorf (DE); Mark, Reinhard, 91217 Hersbruck (DE); Sigwart, Edgar, 92224 Amberg (DE); Singer, Monika, 92263 Ebermannsdorf (DE)

(56) Entgegenhaltungen:
- EP-A- 1 034 986
- EP-A- 1 594 021
- WO-A1-2008/015096
- DE-A1- 10 127 056
- US-A- 4 155 116

## Beschreibung

Die Erfindung betrifft eine Vorrichtung zum Erfassen einer ersten und zweiten Art von Signalen über eine gemeinsame Schnittstelle, wobei die Schnittstelle über einen ersten Signalweg mit einer ersten Auswerteeinheit zum Erfassen der ersten Art von Signalen verbunden ist und wobei die Schnittstelle über einen zweiten Signalweg mit einer zweiten Auswerteeinheit zur Erfassung der zweiten Art von Signalen verbunden ist.

Des Weiteren betrifft die Erfindung ein Verfahren zum Erfassen und Aussenden von Signalen bei fehlersicheren Automatisierungskomponenten, vorzugsweise zum Betrieb der eingangs genanten Vorrichtung.

Auf dem Gebiet der Automatisierungstechnik gibt es für kritische Prozesse die Anforderung, fehlersicher zu automatisieren. Eine Sicherheitstechnik soll automatisierte Vorgänge in einen sicheren Zustand bringen oder halten, wenn "unzulässige Zustände" auftreten. Wenn sich etwa eine Schutztür öffnet oder sich ein Kessel über einen zulässigen Grenzwert erhitzt, muss dies sicher erkannt werden. Beispielsweise werden solche Grenzwerte über Messwertumformer erfasst, welche über eine Analogeingabebaugruppe an ein Automatisierungsgerät angeschlossen sind. In diesem Automatisierungsgerät läuft ein fehlersicheres Automatisierungsprogramm ab. Die Messwerte der Messwertumformer werden über die Analogbaugruppe dem auf sicheres Erfassen der Messwerte ausgelegten Programm des Automatisierungsgerätes mitgeteilt. Beispielsweise sind die Messwertumformer über eine Zweidrahtleitung, einer so genannten 4...20 mA Datenleitung mit der Analogbaugruppe des Automatisierungsgerätes verbunden. Diese Messwertumformer lassen sich beispielsweise in ihrem Messbereich parametrieren. Diese Parametrierung kann auch über ein Kommunikationsprotokoll erfolgen, welches zusätzlich über die Zweidrahtleitung übertragen wird. Eine derartige Vorrichtung ist aus der WO 2008/015096 A1 bekannt. Aber eine kombinierte Nutzung der Zweidrahtleitung für sichere Messwerte aus dem Prozess und eine unsichere Parametrierung der Messwertumformer über dieselbe Leitung scheiden aus Sicherheitsgründen aus. Bisher wurden im Bereich der fehlersicheren Automatisierungsgeräte keine, beispielsweise aufmodulierten nicht sicheren Signale, als zusätzliche Signale zu den Messwertsignalen auf Zweidrahtdatenleitungen verwendet, entsprechende Einstell-Aufgaben, beispielsweise die Parametrierung von Messwertaufnehmern, mussten durch zusätzliche Signalwege, was eine zusätzliche Leitungsführung bedeutet, bewerkstelligt werden oder es müsste durch eine Parametrierung vor Ort am Messwertumformer die Einstell-Aufgabe ausgeführt werden.

Weiterhin ist aus der DE 101 27 561 A1 eine Vorrichtung zur sicheren Signalerzeugung für ein Kraftfahrzeug bekannt.

Aus der US 4 155 116 A ist ein digitales Kontrollsystem mit einer Testeinrichtung bekannt.

Es ist Aufgabe der Erfindung bei fehlersicheren Automatisierungsgeräten die Leitungsführung der in den Prozess führenden Datenleitungen zu reduzieren.

Die Aufgabe wird durch eine Vorrichtung mit den Merkmalen des Anspruchs 1 gelöst. Da diese testbare Auftrennung wie ein kontrollierter Abschaltmechanismus wirkt, kann durch ein kontrolliertes Zu- und wieder Wegschalten eines dritten Signalweges eine dritte Art von Signalen sicher und kontrolliert über die Schnittstelle und somit über eine gemeinsame Datenleitung übertragen werden. Unter der ersten Art von Signalen sind hierbei beispielsweise die Messwerte eines Temperaturgebers zu verstehen. Die zweite Art von Signalen sind beispielsweise Statusdaten des Messwertumformers, welcher aus dem Prozess zur fehlersicheren Automatisierungskomponente geschickt werden. Diese Signale können in Form von Daten in einem Beobachtungsprozess ausgewertet oder protokolliert werden. Die erste Art von Signalen und die zweite Art von Signalen werden als sichere Signale bezeichnet. Diese Signale können nur empfangen und ausgewertet werden. Sie können ein eingestelltes Prozessgeschehen nicht verändern. Werden jedoch Signale in den Prozess geschickt, welche beispielsweise einen Messwertumformer in seinem Messbereich umparametrieren, so könnten diese die Sicherheit der Automatisierungsanlage beeinflussen. Durch die testbare Auftrennung des dritten Signalweges, über welchen beispielsweise die Parametrierdaten für einen Messwertumformer gesendet werden, ist dieser Signalweg überwachbar und das auf Sicherheit ausgelegte Automatisierungsprogramm kann diesen Änderungen folgen und in seinem Programmablauf entsprechend darauf reagieren, so dass die Sicherheit gewährleistet ist.

In einer vorteilhaften Ausgestaltung der Erfindung ist mittels einer an den dritten Signalweg angeschlossenen Signalquelle eine dritte Art von Signalen über die Schnittstelle ausgebbar. Diese dritte Art von Signalen stellen die unsicheren Signale dar. Das Aussenden dieser unsicheren Signale über die Signalquelle kann vom fehlersicheren Anwenderprogramm des Automatisierungsgerätes oder einem entsprechenden Projektierungstool ein- und ausgeschaltet werden.

In einer vorteilhaften Weiterbildung der Erfindung weist das Schaltmittel einen fünften Schalter im zweiten Signalweg und einen vierten Schalter im dritten Signalweg auf, welche derart angeordnet sind, dass wahlweise der zweite oder der dritte Signalweg mit der Schnittstelle verbindbar ist. Der zweite Signalweg mit seinem fünften Schalter ist beispielsweise als ein Empfangssignalweg ausgelegt, welcher permanent Statussignale empfangen kann, welche aus dem Prozess kommen, beispielsweise von den Messwertumformern. Da diese Statussignale als sichere Signale gelten, muss der Empfang dieser Signale nicht überwacht werden. Der dritte Signalweg hingegen wird als Sendesignalweg betrachtet und muss unter Berücksichtigung der Sicherheit überwacht werden. Werden mit Kenntnis des Automatisierungsprogramms nicht sichere Signale in den Automatisierungsprozess gesendet, muss der vierte Schalter geschlossen sein, wobei der fünfte Schalter geöffnet ist.

In einer bevorzugten Ausgestaltung der Erfindung weist das Schaltmittel einen dritten Schalter auf, welcher in einer Reihenschaltung zu dem vierten Schalter innerhalb des dritten Signalweges angeordnet ist. Dieser dritte Schalter ist beispielsweise als Öffner ausgelegt und ermöglicht die zusätzliche Auftrennung des dritten Signalweges um die sichere Funktion des vierten Schalters zu testen.

Auf vorteilhafte Weise ist an die Verbindung des dritten Schalters mit dem vierten Schalter ein erster Schalter derart angeordnet, dass eine Verbindung zu einer Systemspannung herstellbar ist. Ein definiertes Zuschalten einer Systemspannung während eines Testfalles ermöglicht die Generierung eines Testsignals, beispielsweise eines Rücklesesignals, um bestimmte Schaltzustände der Schalter zu überprüfen.

Weiterhin wird auf vorteilhafte Weise der erste Schalter und der dritte Schalter derart ausgestaltet, dass der erste Schalter in einer Wechselbeziehung zum dritten Schalter steht. Das bedeutet, der dritte Schalter und der erste Schalter schalten in einer Zwangsabhängigkeit. Wenn der dritte Schalter für einen Test geöffnet wird, muss zeitgleich der erste Schalter zur Erzeugung eines Testsignals geschlossen werden.

Weitere vorteilhafte Ausgestaltungen der vorrichtungsgemäßen Erfindung sind den Unteransprüchen und den Zeichnungen zu entnehmen.

Das eingangs genannte Verfahren löst die Aufgabe der Erfindung dadurch, dass mittels eines Schaltmittels zum Zu- und Abschalten eines mit der Schnittstelle in Verbindung stehenden dritten Signalweges eine die Sicherheit der Automatisierungsanlage beeinflussende dritte Art von Signalen durch eine testbare Auftrennung des dritten Signalweges kontrolliert über die Schnittstelle ausgesendet wird. Das kontrollierte Aussenden der dritten Art von Signalen, welche unsichere Signale darstellen, ermöglicht die gemeinsame Nutzung einer Datenleitung für sichere und unsichere Signale. Durch das kontrollierte Aussenden der unsicheren Signale über die gemeinsame Schnittstelle wird die Sicherheit bei fehlersicheren Automatisierungskomponenten gewährleistet.

In vorteilhafter Ausgestaltung der Erfindung wird innerhalb des Schaltmittels ein dritter Schalter betätigt, welcher den dritten Signalweg auftrennt. Diese überwachbare Auftrennung mittels des dritten Schalters wird vom Anwenderprogramm des fehlersicheren Automatisierungsgerätes gesteuert und überprüft.

In vorteilhafter Ausgestaltung weist das Schaltmittel verfahrensgemäß einen fünften Schalter auf, welcher während der vierte Schalter geschlossen wird, in einer Wechselbeziehung mit dem vierten Schalter geöffnet wird und den zweiten Signalweg von der Schnittstelle abkoppelt. Der vierte Schalter und der fünfte Schalter werden wie eine Sende- und Empfangs-umschaltung betrieben. Beispielsweise gibt der vierte Schalter den Sendeweg frei, wobei zeitgleich der fünfte Schalter den Empfangsweg zu einem Empfänger durchschaltet.

Zweckmäßig ist hierbei, dass über einen das Schaltmittel aufweisenden ersten Schalter ein Rücklese-Signal erzeugt wird, wobei der dritte Schalter und der erste Schalter miteinander in einer Wechselwirkung betätigt werden.

In weiterer Ausgestaltung wird die Reihenschaltung aus dem ersten Schalter und dem vierten Schalter über einen zweiten Schalter mit einem zum Rücklese-Signal unterschiedlichen Potenzial verbunden und dadurch die Auftrennung des dritten Signalweges getestet. Durch die unterschiedlichen Schalterstellungen der Schalter und die Verbindung mit unterschiedlichen Bezugspotenzialen können an einer Mess-Stelle Signale erzeugt werden, welche über das Automatisierungsgerät auswertbar sind und somit die sichere Funktion des dritten Signalweges überwacht werden kann.

In weiterer Ausgestaltung der Erfindung wird die Funktion des vierten Schalters zyklisch auf sicheres Öffnen überwacht. Je nach Sicherheitsstufe des zu automatisierenden sicherheitsrelevanten Prozesses kann eine Überwachung im Minutentakt oder auch sogar im Millisekundentakt erfolgen. Werden beispielsweise sicherheitsrelevante Messwerte im Sekundentakt abgefragt, so wird auch die Verbindung zumindest im Sekundentakt überwacht, denn es darf bei einer fehlersicheren Automatisierungsanlage nicht geschehen, dass beispielsweise zwischen zwei Messwerten der Messwertumformer versehentlich umparametriert wurde und somit durch einen neuen Messbereich einen fehlerhaften Messwert dem Automatisierungsprogramm zur Verfügung stellt.

Auf vorteilhafte Weise wird bei Erkennen einer Fehlfunktion des vierten Schalters eine die Sicherheit gewährleistende Aktion ausgelöst. Wird durch die Überwachung des vierten Schalters festgestellt, dass seine Funktion gestört oder beeinträchtigt ist, kann das fehlersichere Anwendungsprogramm in der fehlersicheren Automatisierungsanlage darauf reagieren und die Anlage in einen sicheren Zustand fahren oder dem Bedienpersonal frühzeitig eine entsprechende Meldung ausgeben.

Des Weiteren wird die eingangs genannte Aufgabe durch eine Schaltungsanordnung zur Überwachung des Schaltzustandes eines vierten Schalters gelöst. Die Schaltungsanordnung umfasst einen dritten Schalter, einen zweiten Schalter, eine Mess-Stelle und einen ersten Schalter, wobei der dritte Schalter in eine Reihenschaltung mit dem vierten Schalter angeordnet ist, wobei der zweite Anschluss des dritten Schalters mit dem ersten Anschluss des vierten Schalters verbunden ist und der erste Schalter mit seinem ersten Anschluss zwischen dem dritten Schalter und dem vierten Schalter angeschlossen ist, wobei diese Anschlussstelle die Mess-Stelle bildet, und wobei der zweite Anschluss des ersten Schalters mit einer Systemspannung verbunden ist. Weiterhin ist der zweite Schalter über seinen zweiten Anschluss mit dem zweiten Anschluss des vierten Schalters verbunden und der erste Anschluss des zweiten Schalters ist mit einem Masse-Potenzial verbunden, weiterhin stehen der erste Schalter, der zweite Schalter und der dritte Schalter dabei in einer Wirkbeziehung, wobei durch Betätigen der in der Wirkbeziehung stehenden Schalter ein Zustands-Signal an der Mess-Stelle erzeugbar ist, welches eine Aussage über den Schaltzustand des vierten Schalters gibt.

Die Zeichnung zeigt ein Ausführungsbeispiel einer erfindungsgemäßen Vorrichtung. Dabei zeigen:
- FIG 1: ein Übersichtsbild einer Vorrichtung am Beispiel einer Analogeingabebaugruppe und
- FIG 2: die überwachbare Auftrennung eines Signalweges im De- tail.

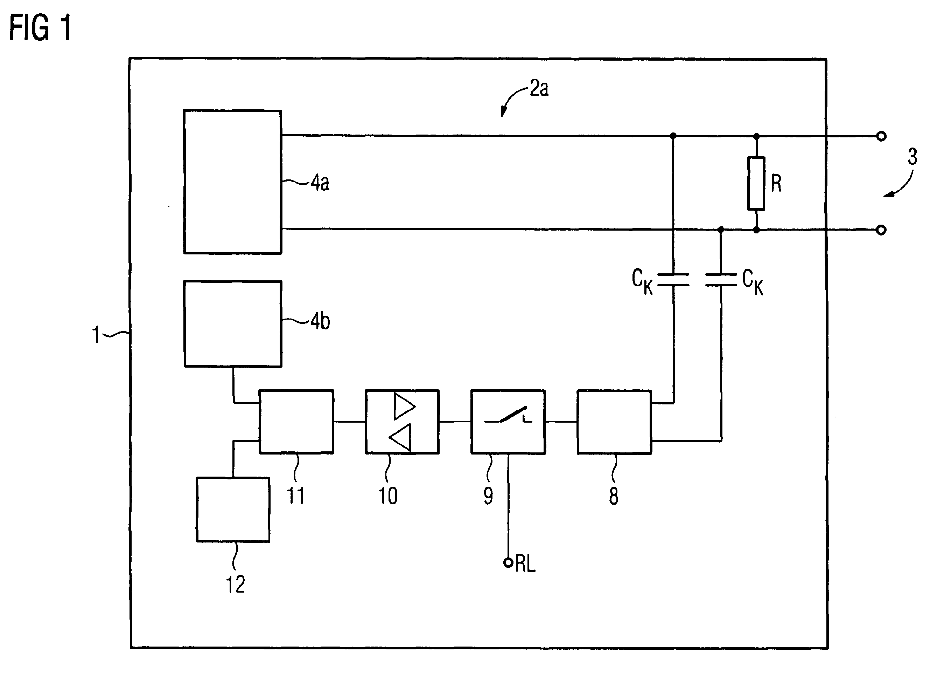

Gemäß FIG 1 ist eine Vorrichtung zum Erfassen und Aussenden von Signalen dargestellt. Die Vorrichtung 1 wird im nachfolgenden als Analogbaugruppe bezeichnet. Die Analogbaugruppe empfängt Messwerte über die Schnittstelle 3, welche an eine nicht dargestellte Zweidrahtleitung angeschlossen ist. Diese Zweidrahtleitung ist als ein 4...20 mA-Stromkreis ausgestaltet. An diesen 4...20 mA-Stromkreis ist ein Messwertumformer angeschlossen. Der Messwertumformer in Form eines Temperaturwiderstandes liefert Messwerte, welche durch die Analogbaugruppe erfasst werden und an ein der Analogbaugruppe zugeordnetes Automatisierungssystem weitergeleitet werden. Die den Stromwerten entsprechenden Messwerte werden als Spannungsabfall an einem Widerstand R messbar und über einen ersten Signalweg 2a zu einer ersten Auswerteeinheit 4a geleitet. Die Auswerteeinheit 4a ist als ein Digital/Analog-Wandler ausgestaltet. Die gewandelten Messwerte werden dem nicht dargestellten Automatisierungsgerät zugeführt. Um eine zweite Art von Signalen zu erfassen, ist eine zweite Auswerteeinheit 4b innerhalb der Analogbaugruppe angeordnet. Die zweite Auswerteeinheit 4b ist dazu ausgelegt, Signale, welche in Form eines HART-Protokolls vorliegen, auszuwerten. Diese HART-Signale entsprechen Signalen, welche auf den Gleichstromkreis von 4...20 mA des Messwertumformers aufmoduliert werden. Statusinformationen, die der Messwertumformer zu der Analogbaugruppe zur Auswertung in einem Automatisierungssystem mit anschließender Darstellung in einem Bedien- und Beobachtungssystem sendet, werden über die Schnittstelle 3 über zwei Koppelkondensatoren C_{K} zu einem Übertrager 8 geleitet. Über den Übertrager 8 gelangen die Statussignale über ein Schaltmittel 9 mittels eines Verstärkers 10 über ein Modem 11 zur:zweiten Auswerteeinheit 4b. Das Modem 11 ist als ein HART-Modem ausgestaltet.

Neben den eigentlichen Temperaturmesswerten, welche als Gleichstromwerte vorliegen und in der ersten Auswerteeinheit 4a für eine Weiterverarbeitung im Automatisierungsgerät gewandelt werden, können über die gleiche Schnittstelle 3 Diagnoseinformationen der Messwertumformer als aufmodulierte HART-Signale in das Anwenderprogramm des Automatisierungsgeräts weitergeleitet werden. Da das aufmodulierte HART-Signal einem sinusförmigen Signal mit dem Mittelwert Null entspricht, beeinflusst es die Temperatursignale nicht.

Mittels einer an das Modem 11 angeschlossenen Signalquelle 12 können über den Verstärker 10 und über das Schaltmittel 9 mittels des Übertragers 8 über die Koppelkondensatoren CK Signale über die Schnittstelle 3 in den Prozess bzw. zu den Messwertumformern gesendet werden. Bei diesen Signalen handelt es sich um so genannte unsichere Signale, weil mit diesen Signalen die Parametrierung eines Messwertumformers geändert werden kann. Es lässt sich beispielsweise der Messbereich eines Messwertumformers ändern, was zur Folge hat, dass dieser Messwertumformer nun im Vergleich zu vorher anders skalierte Messwerte an die Analogbaugruppe liefert. Wurde zuvor das Anwenderprogramm des Automatisierungsgeräts nicht auf diese neu skalierten Messwerte abgestimmt, so kann das Automatisierungsgerät auf bestimmte Messwerte falsch reagieren und die Sicherheit der zu automatisierenden Anlage ist gefährdet.

Um die Sicherheit in diesen Bereichen zu gewährleisten wurden bisher bei fehlersicheren Automatisierungsgeräten aufmodulierte nicht sichere Signale als Zusatzsignale nicht verwendet. Entsprechende Aufgaben, die sich mit aufmodulierten Signalen lösen ließen, mussten durch zusätzliche Signalwege bewerkstelligt werden. Für den Fall, dass über die Signalquelle 12 unsichere Signale in den Prozess geschickt werden, ist im Schaltmittel 9 ein überwachbarer Abschaltmechanismus vorhanden, welcher den Signalweg der nicht sicheren Parametriersignale überwacht und überprüft. Bei nicht ordnungsgemäßer Funktion wird über eine weitere Signalleitung ein Rücklesesignal erzeugt, welches im dazugehörigen Automatisierungsgerät eine die Sicherheit gewährleistende Aktion auslöst.

Mit der Analogbaugruppe gemäß Figur 1 ist es möglich, über eine einzige Zwei-Draht-Datenleitung, welche an die Schnittstelle 3 angeschlossen ist, Messwertsignale zu empfangen und unsichere Signale, beispielsweise Parametriersignale, für den Messwertumformer über ein und dieselbe Zwei-Draht-Datenleitung zu übertragen.

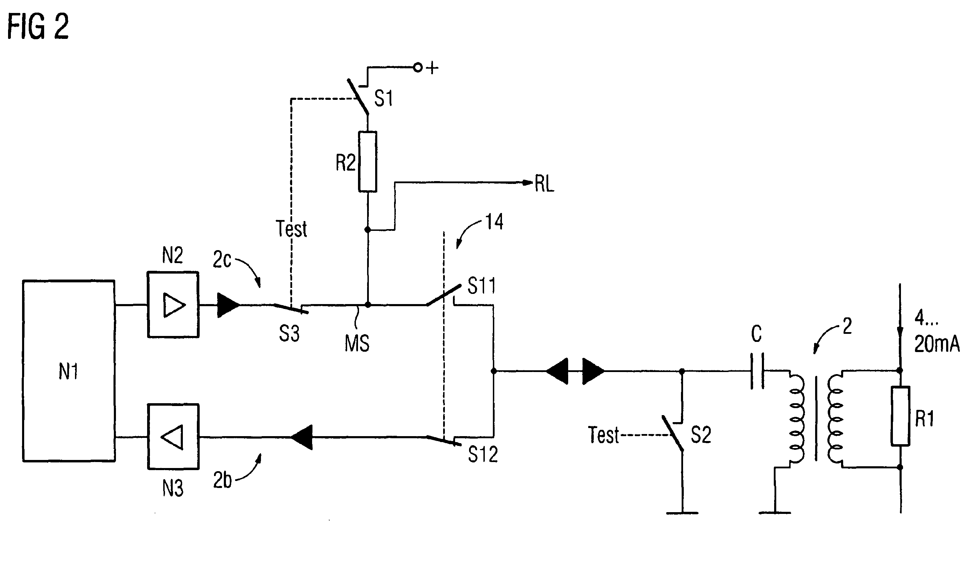

Gemäß Figur 2 ist das in der Figur 1 bereits beschriebene Schaltmittel 9 detaillierter dargestellt. Die Stränge 2b und 2c bilden einen zweiten und einen dritten Signalweg, welche über ein HART-Modem N1 mit einem nicht dargestellten Automatisierungsgerät in Verbindung stehen. Der zweite Signalweg 2b ist mittels eines Verstärkers N3 an das HART-Modem N1 angeschlossen. Ein als Öffner ausgelegter fünfter Schalter S12 verbindet den zweiten Signalweg 2b und somit das HART-Modem, mit einem Übertrager 8, welcher wiederum mit der schon in Figur 1 beschriebenen Schnittstelle 3 bzw. der Zwei-Draht-Datenleitung gekoppelt ist.

Der zweite Signalweg 2b ist ein Empfangsweg für an das HART-Modem N1 gerichtete Signale. Der dritte Signalweg 2c ist ein Sendeweg für von dem HART-Modem N1 über einen Verstärker N2 an den Prozess gerichteten Signale. Von dem HART-Modem N1 ausgehende Parametriersignale gelangen somit über den dritten Schalter S3, welcher als Öffner ausgelegt ist, und über den vierten Schalter S11, welcher als Schließer ausgelegt ist, an den Übertrager 8 in die Zwei-Draht-Datenleitung. Der vierte Schalter S11 im dritten Signalweg 2c und der fünfte Schalter S12 im zweiten Signalweg 2b arbeiten wie ein Wechselschalter zusammen. Ist der fünfte Schalter S12 zum Empfangen von Daten über den zweiten Signalweg 2b geschlossen, so ist der vierte Schalter S11 zum Senden von Daten im Signalweg 2b geöffnet und umgekehrt. Der vierte Schalter S11 und der fünfte Schalter S12 sind zu einer Sende-Empfangs-Umschaltung 14 zusammengefasst. Der innerhalb des dritten Signalwegs 2c angeordnete dritte Schalter S3 ist als Öffner ausgelegt und steht in einer Wirkverbindung mit einem ersten Schalter S1. Wird der dritte Schalter S3 zur Überprüfung des vierten Schalters S11 im dritten Signalweg 2c geöffnet, so wird gleichzeitig der erste Schalter S1 geschlossen und legt damit über einen 10 kOhm-Widerstand R2 eine positive Versorgungsspannung an die Mess-Stelle MS bzw. an eine Signalleitung für ein Rücklesesignal RL an. Zeitgleich wird an der Zusammenführung des zweiten Signalwegs 2b und des dritten Signalwegs 2c hinter dem vierten Schalter S11 und dem fünften Schalter S12 über einen zweiten Schalter S2 die Zusammenführung des zweiten Signalwegs 2b und des dritten Signalwegs 2c an ein Massepotenzial gelegt. Die Sende-Empfangs-Umschaltung 14, welche aus dem vierten Schalter S11 und dem fünften Schalter S12 besteht, wird dazu benutzt, die fehlersichere Abschaltung des dritten Signalwegs 2c mittels des dritten Schalters S3 zu testen.

Um eine sichere Abschaltung des dritten Signalwegs 2c vom HART-Modem N1 zu gewährleisten, muss der vierte Schalter S11 sicher öffnen. Ob der vierte Schalter S11 in der Lage ist zu öffnen, wird mit nachfolgend beschriebenem Testablauf geprüft:
1. Einschalten eines Test-Signals, welches durch das dazugehörige Automatisierungsgerät generiert wird. Dieses Signal veranlasst die Sende-Empfangs-Umschaltung 14 in den Modus "Empfangen" zu wechseln. Hierbei ist der vierte Schalter S11 geöffnet und der fünfte Schalter S12 geschlossen. Weiterhin werden der erste Schalter S1 und der zweite Schalter S2 geschlossen. Dabei wird der dritte Schalter S3 geöffnet.
2. Gegebenenfalls warten, bis der Kondensator C entladen ist.
3. Prüfen, welcher logische Wert, Null oder Eins, dem Rücklesesignal RL entspricht. Für eine ordnungsgemäße Funktion des Schalters S11 muss das Rücklesesignal RL jetzt logisch Eins sein, weil das Rücklesesignal RL über den 10 kOhm Widerstand R2 durch die Versorgungsspannung erzeugt wird und der vierte Schalter S11 geöffnet ist. Wäre der vierte Schalter S11 geschlossen, so entspräche das Rücklesesignal RL dem Wert Null.
4. Die Sende-Empfangs-Umschaltung 14 wird auf "Senden" umgeschaltet, dabei ist der vierte Schalter S11 geschlossen und der fünfte Schalter S12 geöffnet.
5. Das Rücklesesignal RL muss jetzt einer logischen Null entsprechen, weil über den vierten Schalter S11 und den zweiten Schalter S2 der Messpunkt MS und damit das Rücklesesignal RL nach Masse "gezogen" wird.
6. Die Sende-Empfangs-Umschaltung 14 wird wieder auf "Empfangen" umgeschaltet.
7. Ausschalten des Testsignals. Der erste Schalter S1 und der zweite Schalter S2 werden geöffnet. Der dritte Schalter S3 wird wieder geschlossen.
8. Ende des Funktionstests für die sichere Abschaltung des dritten Signalwegs 2c bzw. die Überprüfung des Schalters S11.

Zusammenfassend erfolgt die fehlersichere Abschaltung eines unsicheren Signals durch einen durch den Schalter S3 testbaren Schalter S11 der Sende-Empfangs-Einheit 14. Die Möglichkeit der Mischung von sicheren und nicht sicheren Signalen auf einer Leitung ist nun gegeben. Hierdurch können Kosten eingespart werden, da kein weiteres Übertragungsmedium erforderlich ist. Bei Revisionen oder Störungen der zu automatisierenden Anlage kann die Kommunikation zu den Messwertumformern direkt von der Schaltwarte aus erfolgen. Arbeiten direkt am Sensor sind nicht mehr erforderlich. Durch die Abschaltung des dritten Signalwegs 2c und die fehlersichere Überwachung des Signalwegs 2c sind darüber hinaus auf vorteilhafte Weise keine verriegelbaren Messwertumformer erforderlich.

## Patentansprüche

1. Vorrichtung (1) zum Erfassen einer ersten und zweiten Art von Signalen über eine gemeinsame Schnittstelle (3), wobei die Schnittstelle (3) eine Zwei-Draht-Stromschnittstelle für einen Messwertumformer ist, wobei die Schnittstelle (3) über einen ersten Signalweg (2a) mit einer ersten Auswerteeinheit (4a) zum Erfassen der ersten Art von Signalen verbunden ist, und wobei die Schnittstelle (3) über einen zweiten Signalweg (2b) mit einer zweiten Auswerteeinheit (4b) zur Erfassung der zweiten Art von Signalen verbunden ist, wobei ein Schaltmittel (9) zum Verbinden eines dritten Signalweges (2c) mit der Schnittstelle (3) vorhanden ist, wobei das Schaltmittel (9) den dritten Signalweg (2c) mit der Schnittstelle (3) verbindet, wobei eine an den dritten Signalweg (2c) angeschlossenen Signalquelle (12) vorhanden ist, welche eine dritte Art von Signalen an die Schnittstelle (3) ausgibt, **dadurch gekennzeichnet, dass** das Schaltmittel (9) derart ausgestaltet ist, das ein kontrolliertes Zu- und wieder Wegschalten des dritten Signalweges (2c) möglich ist und damit die dritte Art von Signalen sicher und kontrolliert übertragen werden.

2. Vorrichtung (1) nach Anspruch 1, wobei das Schaltmittel (9) einen fünften Schalter (S12) im zweiten Signalweg (2b) und einen vierten Schalter (S11) im dritten Signalweg (2c) aufweist, welche derart angeordnet sind, dass wahlweise der zweite oder der dritte Signalweg (2b, 2c) mit der Schnittstelle (3) verbindbar ist, wobei zur Überwachung des Schaltzustandes des vierten Schalters (S11) ein zweiter Schalter (S2), eine Mess-Stelle (MS) und ein erster Schalter (S1) vorhanden ist, wobei der dritte Schalter (S3) in einer Reihenschaltung mit dem vierten Schalter (S11) angeordnet ist, wobei der zweite Anschluss des dritten Schalters (S3) mit dem ersten Anschluss des vierten Schalters verbunden ist und der erste Schalter (S1) mit seinem ersten Anschluss zwischen dem dritten Schalter (S3) und dem vierten Schalter (S11) angeschlossen ist, wobei diese Anschlussstelle die Mess-Stelle (MS) bildet, und wobei der zweite Anschluss des ersten Schalters (S1) mit einer Systemspannung verbunden ist, weiterhin ist der zweite Schalter (S2) über seinen zweiten Anschluss mit dem zweiten Anschluss des vierten Schalters (S11) verbunden und der erste Anschluss des zweiten Schalters (S2) ist mit einem Masse-Potential verbunden, weiterhin stehen der erste Schalter (S1), der zweite Schalter (S2) und der dritte Schalter (S3) dabei in einer Wirkbeziehung, wobei durch Betätigen der in der Wirkbeziehung stehenden Schalter (S1, S2, S3) ein Zustands-Signal an der Mess-Stelle (MS) erzeugbar ist, welches eine Aussage über den Schaltzustand des vierten Schalters (S11) gibt.

3. Vorrichtung (1) nach Anspruch 2, wobei zwischen der Signalquelle (12) und der Reihenschaltung aus dem dritten Schalter (S3) zu dem vierten Schalter (S11) ein HART-Modem (11) und ein Verstärker (10) angeordnet sind.

4. Vorrichtung (1) nach Anspruch 1 oder 2, wobei der Messwertumformer über die Schnittstelle (3) parametrierbar ist.

5. Verfahren zum Erfassen und Aussenden von Signalen bei fehlersicheren Automatisierungskomponenten, wobei eine erste Art von Signalen über eine Schnittstelle (3) einer ersten Auswerteeinheit (4a) zugeführt wird und die Verbindung zwischen der ersten Auswerteeinheit (4a) und der Schnittstelle (3) einen ersten Signalweg (2a) bildet, und wobei eine weitere Verbindung der Schnittstelle (3) mit einer zweiten Auswerteeinheit (4b) einen zweiten Signalweg (2b) bildet über den eine zweite Art von Signalen an die zweite Auswerteeinheit (2b) geführt wird, wobei die Schnittstelle (3), als eine Zwei-Drahtstromschnittstelle für einen Messwertumformer betrieben wird, **dadurch gekennzeichnet, dass** mittels eines Schaltmittels (9) zum Zu- und Abschalten eines mit der Schnittstelle (3) in Verbindung stehenden dritten Signalweges (2c) eine die Sicherheit der Automatisierungsanlage beeinflussende dritte Art von Signalen durch eine testbare Auftrennung des dritten Signalweges (2c) kontrolliert über die Schnittstelle (3) ausgesendet wird, wobei die Auftrennung des dritten Signalweges (2c) überwacht wird.

6. Verfahren nach Anspruch 5, wobei innerhalb des Schaltmittels (9) ein dritter Schalter (S3) betätigt wird, welcher den dritten Signalweg (2c) auftrennt, wobei zum Senden der dritten Art von Signalen ein vierter Schalter (S11) im Schaltmittel (9) betätigt wird, welcher den dritten Signalwege (2c) zum Aussenden der dritten Art von Signalen zur Schnittstelle (3) frei schaltet, wobei über einen das Schaltmittel (9) aufweisenden ersten Schalter (S1) ein Rücklese-Signal (RL) erzeugt wird, wobei der dritte Schalter (S3) und der erste Schalter (S1) miteinander in einer Wechselwirkung bestätigt werden, wobei die Reihenschaltung aus dem ersten Schalter (S1) und dem vierten Schalter (S11) über einen zweiten Schalter (S2) mit einem zum Rücklese-Signal (RL) unterschiedlichen Potential verbunden wird und **dadurch** die Auftrennung des dritten Signalweges (2c) getestet wird.

7. Verfahren nach einem der Ansprüche 5 bis 6, wobei das Schaltmittel (9) einen fünften Schalter (S12) aufweist, welcher während der vierte Schalter (S11) geschlossen wird, in einer Wechselbeziehung mit dem vierten Schalter (S11) geöffnet wird und den zweiten Signalweg (2c) von der Schnittstelle (3) abkoppelt.

8. Verfahren nach Anspruch 7, wobei die Funktion des vierten Schalters (S11) zyklisch auf sicheres Öffnen überwacht wird.

9. Verfahren nach Anspruch 7 oder 8, wobei bei einer Fehlfunktion des vierten Schalters (S11) eine die Sicherheit gewährleistende Aktion ausgelöst wird.

## Claims

1. Device (1) for detecting signals of a first type and a second type via a common interface (3), the interface (3) being a two-wire current interface for a measuring transducer, the interface (3) being connected, via a first signal path (2a), to a first evaluation unit (4a) for detecting signals of the first type, and the interface (3) being connected, via a second signal path (2b), to a second evaluation unit (4b) for detecting signals of the second type, a switching means (9) for connecting a third signal path (2c) to the interface (3) being provided, the switching means (9) connecting the third signal path (2c) to the interface (3), a signal source (12) which is connected to the third signal path (2c) and outputs signals of a third type to the interface (3) being provided, **characterized in that** the switching means (9) is configured in such a manner that it is possible to connect and disconnect the third signal path (2c) again in a controlled manner, and signals of the third type are thus transmitted in a safe and controlled manner.

2. Device (1) according to Claim 1, the switching means (9) having a fifth switch (S12) in the second signal path (2b) and a fourth switch (S11) in the third signal path (2c), which switches are arranged in such a manner that either the second signal path (2b) or the third signal path (2c) can be connected to the interface (3), a second switch (S2), a measuring point (MS) and a first switch (S1) being provided for the purpose of monitoring the switching state of the fourth switch (S11), the third switch (S3) being arranged in a series circuit with the fourth switch (S11), the second connection of the third switch (S3) being connected to the first connection of the fourth switch and the first connection of the first switch (S1) being connected between the third switch (S3) and the fourth switch (S11), this connecting point forming the measuring point (MS), and the second connection of the first switch (S1) being connected to a system voltage, the second connection of the second switch (S2) furthermore being connected to the second connection of the fourth switch (S11) and the first connection of the second switch (S2) being connected to an earth potential, the first switch (S2), the second switch (S2) and the third switch (S3) furthermore being operatively related in this case, a state signal which provides a statement on the switching state of the fourth switch (S11) being able to be generated at the measuring point (MS) by operating the operatively related switches (S1, S2, S3).

3. Device (1) according to Claim 2, a HART modem (11) and an amplifier (10) being arranged between the signal source (12) and the series circuit comprising the third switch (S3) and the fourth switch (S11).

4. Device (1) according to Claim 1 or 2, the measuring transducer being able to be parameterized via the interface (3).

5. Method for detecting and emitting signals in fail-safe automation components, signals of a first type being supplied to a first evaluation unit (4a) via an interface (3) and the connection between the first evaluation unit (4a) and the interface (3) forming a first signal path (2a), and a further connection between the interface (3) and a second evaluation unit (4b) forming a second signal path (2b) which is used to guide signals of a second type to the second evaluation unit (2b), the interface (3) being operated as a two-wire current interface for a measuring transducer, **characterized in that** a switching means (9) for connecting and disconnecting a third signal path (2c) connected to the interface (3) is used to emit signals of a third type, which influence the safety of the automation system, in a controlled manner by separating the third signal path (2c) via the interface (3) in a manner which can be tested, the separation of the third signal path (2c) being monitored.

6. Method according to Claim 5, a third switch (S3) which separates the third signal path (2c) being operated inside the switching means (9), a fourth switch (S11) which enables the third signal path (2c) for emitting signals of the third type to the interface (3) being operated in the switching means (9) in order to transmit signals of the third type, a read-back signal (RL) being generated via a first switch (S1) having the switching means (9), the third switch (S3) and the first switch (S1) being operated in interaction with one another, the series circuit comprising the first switch (S1) and the fourth switch (S11) being connected to a potential which differs from the read-back signal (RL) via a second switch (S2) and the separation of the third signal path (2c) being tested thereby.

7. Method according to either of Claims 5 and 6, the switching means (9) having a fifth switch (S12) which, while the fourth switch (S11) is closed, is opened in an interrelationship with the fourth switch (S11) and decouples the second signal path (2c) from the interface (3).

8. Method according to Claim 7, the function of the fourth switch (S11) being cyclically monitored for safe opening.

9. Method according to Claim 7 or 8, an action which ensures safety being initiated in the event of a malfunction of the fourth switch (S11).

## Revendications

1. Dispositif ( 1 ) de détection d'un premier et deuxième types de signaux par l'intermédiaire d'une interface ( 3 ) conjointe, l'interface ( 3 ) étant une interface de courant à deux fils pour un transducteur de valeur de mesure, l'interface ( 3 ) étant reliée par une première voie ( 2a ) de signalisation à une première unité ( 4a ) d'exploitation pour détecter le premier type de signaux, et l'interface ( 3 ) étant reliée par une deuxième voie ( 2b ) de signalisation à une deuxième unité ( 4b ) d'exploitation pour la détection du deuxième type de signaux, un moyen ( 9 ) de commutation étant prévu pour relier une troisième voie ( 2c ) de signalisation à l'interface (3), le moyen ( 9 ) de commutation reliant la troisième voie (2c) de signalisation à l'interface ( 3 ), une source (12) de signal raccordée à la troisième voie ( 2c ) de signalisation étant présente et envoyant un troisième type de signaux à l'interface ( 3 ), **caractérisé en ce que** le moyen ( 9 ) de commutation est tel qu'une connexion et une redéconnexion contrôlée de la troisième voie ( 2c ) de signalisation est possible et qu'ainsi le troisième type de signaux peut être transmis d'une manière sûre et contrôlée.

2. Dispositif ( 1 ) suivant la revendication 1, dans lequel le moyen ( 9 ) de commutation comporte un cinquième interrupteur ( S12 ) dans la deuxième voie ( 2b ) de signalisation et un quatrième interrupteur ( S11 ) dans la troisième voie ( 2c ) de signalisation, lesquels sont montés de manière à pouvoir relier au choix la deuxième ou la troisième voie ( 2b, 2c ) de signalisation à l'interface ( 3 ), dans lequel, pour le contrôle de l'état de commutation du quatrième interrupteur ( S11 ), il y a un deuxième interrupteur ( S2 ), un point ( MS ) de mesure et un premier interrupteur ( S1 ), le troisième interrupteur ( S3 ) étant monté dans un circuit série avec le quatrième interrupteur ( S11 ), la deuxième borne du troisième interrupteur ( S3 ) étant reliée à la première borne du quatrième interrupteur et le premier interrupteur ( S1 ) étant raccordé par sa première borne entre le troisième interrupteur ( S3 ) et le quatrième interrupteur ( S11 ), ce point de raccordement formant le point ( MS ) de mesure, et dans lequel une tension de système est appliquée à la deuxième borne du premier interrupteur ( S1 ), le deuxième interrupteur ( S2 ) étant relié, en outre, par sa deuxième borne à la deuxième borne du quatrième interrupteur ( S11 ) et la première borne du deuxième interrupteur ( S2 ) est reliée à un potentiel de masse, le premier interrupteur ( S1 ), le deuxième interrupteur ( S2 ) et le troisième interrupteur ( S3 ) étant, en outre, dans une relation de travail, dans lequel, en actionnant les interrupteurs ( S1, S2, S3 ) en la relation de travail, un signal d'état peut être produit au point ( MS ) de mesure et donner une prédiction sur l'état de commutation du quatrième interrupteur ( S11 ).

3. Dispositif ( 1 ) suivant la revendication 2, dans lequel il est monté un modem ( 11 ) HART et un amplificateur ( 10 ) entre la source ( 12 ) de signal et le circuit série allant du troisième interrupteur ( S3 ) au quatrième interrupteur ( S11 ).

4. Dispositif (1) suivant la revendication 1 ou 2, dans lequel le transducteur de valeur de mesure peut être paramétré par l'intermédiaire de l'interface ( 3 ).

5. Procédé de détection et d'émission de signaux pour des composants d'automatisation sécurisés vis-à-vis de l'erreur, dans lequel on envoie un premier type de signaux à une première unité (4a) d'exploitation par l'intermédiaire de l'interface ( 3 ) et la liaison entre la première unité ( 4a ) et l'interface ( 3 ) forme une première voie ( 2a ) de signalisation et dans lequel une autre liaison de l'interface ( 3 ) avec une deuxième unité ( 4b ) d'exploitation forme une deuxième voie ( 2b ) de signalisation, par lequel un deuxième type de signaux est envoyé à la deuxième unité ( 2b ) d'exploitation, l'interface ( 3 ) fonctionnant en interface de courant à deux fils pour un transducteur de valeur de mesure, **caractérisé en ce que**, à l'aide d'un moyen ( 9 ) de commutation pour la connexion et la déconnexion d'une troisième voie ( 2c ) de signalisation en liaison avec l'interface ( 3 ), on envoie par l'interface ( 3 ), d'une manière contrôlée par une séparation pouvant être testée de la troisième voie ( 2c ) de signalisation, un troisième type de signaux influençant la sécurité de l'installation d'automatisation, la séparation de la troisième voie ( 2c ) de signalisation étant contrôlée.

6. Procédé suivant la revendication 5, dans lequel on actionne à l'intérieur du moyen ( 9 ) de commutation un troisième interrupteur ( S3 ), qui sépare la troisième voie ( 2c ) de signalisation, dans lequel on actionne pour l'envoi du troisième type de signaux un quatrième interrupteur ( S11 ) du moyen ( 9 ) de commutation, interrupteur qui déconnecte la troisième voie ( 2c ) de signalisation pour émettre le troisième type de signaux vers l'interface ( 3 ), dans lequel, par l'intermédiaire d'un premier commutateur ( S1 ) comportant le moyen ( 9 ) de commutation, on produit un signal ( RL ) de lecture en retour, dans lequel le troisième interrupteur ( S3 ) et le premier interrupteur ( S1 ) sont actionnés ensemble suivant une interaction, le circuit série composé du premier interrupteur ( S1 ) et du quatrième interrupteur ( S11 ) étant relié par l'intermédiaire d'un deuxième interrupteur ( S2 ) à un potentiel différent du signal ( RL ) de lecture en retour et la séparation de la troisième voie ( 2c ) de signalisation étant ainsi testée.

7. Procédé suivant l'une des revendications 5 à 6, dans lequel le moyen ( 9 ) de commutation comporte un cinquième interrupteur ( S12 ), qui, pendant que le quatrième interrupteur ( S11 ) est fermé, est ouvert en relation d'alternance avec le quatrième interrupteur ( S11 ) et découple la deuxième voie ( 2c ) de signalisation de l'interface ( 3 ).

8. Procédé suivant la revendication 7, dans lequel on contrôle cycliquement le fonctionnement du quatrième interrupteur ( S11 ) en ce qui concerne la sécurité de l'ouverture.

9. Procédé suivant la revendication 7 ou 8, dans lequel, si le quatrième interrupteur ( S11 ) fonctionne d'une manière défectueuse, on déclenche une action assurant la sécurité.
